# FASCICULE DE BREVET EUROPEEN

(11) **EP 2 423 519 B1**
(45) Date de publication et mention de la délivrance du brevet: **02.08.2017**
(21) Numéro de dépôt: 11177308.1
(22) Date de dépôt: 11.08.2011
(51) Int. Cl.: F16B 39/10, F16B 39/284

(54) **Dispositif de fixation**
Befestigungsvorrichtung
Attachment device

(30) Priorité: 25.08.2010 FR 1056752
(43) Date de publication de la demande: 29.02.2012
(73) Titulaire: Alcoa Fixations Simmonds SAS, 72110 Saint-Cosme-en-Vairais (FR)
(72) Inventeur: Cormier, Arnaud, 72000 LE MANS (FR)
(74) Mandataire: Desaix, Anne

(56) Documents cités:
- AU-A- 8 213 675
- FR-A- 902 278
- FR-A1- 2 854 213

## Description

La présente invention concerne un dispositif de fixation, destiné notamment au domaine aéronautique.

Dans un tel domaine, il est particulièrement important de s'assurer de la bonne fixation des différents éléments. Lors du vol d'un avion, les vibrations générées peuvent amener un écrou à se desserrer, provoquant un mouvement relatif néfaste entre les éléments à fixer, voire leur désolidarisation.

Afin d'éviter cela, le document FR 2 854 213, au nom de la Demanderesse, propose un dispositif de fixation comprenant une tige filetée, un écrou vissable sur la tige et des moyens de blocage en rotation de l'écrou par rapport à la tige filetée comprenant une bague intermédiaire montée entre l'écrou et une extrémité de la tige filetée. Cette bague comprend des moyens de couplage en rotation avec l'extrémité de la tige filetée et des moyens de couplage en rotation avec l'écrou.

Un tel dispositif permet d'éviter de manière relativement sûre toute rotation de l'écrou par rapport à la tige filetée, et donc un desserrage de cet écrou sous l'effet des vibrations.

Il convient d'améliorer encore la sécurité des assemblages et des fixations, en particulier dans le domaine de l'aéronautique.

L'invention a notamment pour but d'apporter une solution simple, efficace et économique à ce problème.

A cet effet, elle propose un dispositif de fixation comprenant une tige filetée, un écrou vissable sur la tige et des moyens de blocage en rotation de l'écrou par rapport à la tige filetée comprenant une bague intermédiaire montée entre l'écrou et une extrémité de la tige filetée, cette bague comprenant des moyens de couplage en rotation avec l'extrémité de la tige filetée et des moyens de couplage en rotation avec l'écrou, caractérisé en ce que l'écrou comprend une partie amincie qui est élastiquement déformable au serrage en fin de vissage sur la tige filetée et en ce que la bague intermédiaire est montée et immobilisée en rotation dans ladite jupe par les moyens de couplage précités.

La déformation élastique de la partie amincie de l'écrou qui est réalisée selon l'invention lors du vissage, forme un frein s'opposant au desserrage de l'écrou sous l'effet des sollicitations extérieures.

La déformation élastique de la partie amincie permet d'obtenir une pression constante sur le filetage de la vis lors du serrage.

Dans un mode de réalisation préféré de l'invention, la partie amincie de l'écrou est une jupe cylindrique qui s'étend axialement à partir de l'écrou.

Cette jupe peut par exemple présenter une zone de plus faible section, par exemple par déformation plastique préalable, qui sera élargie par forçage lors du vissage.

Le filetage peut également comporter une zone dans laquelle le pas est réduit, le forçage de la tige filetée dans le filetage permettant de déformer le filet et ainsi garantir le freinage lors du vissage.

Avantageusement, l'extrémité de la tige filetée comporte au moins une arête longitudinale saillante, le bord radialement interne de la bague étant pourvu d'une pluralité de dents ou de crans susceptibles de venir en prise avec cette arête longitudinale et définissent une pluralité de positions angulaires de la bague autour de l'extrémité de la tige filetée.

Selon une autre caractéristique de l'invention, l'extrémité de la tige filetée est une tige axiale de diamètre réduit, à section externe polygonale, par exemple hexagonale.

Cette section peut également être du type bi-hexagonal ou de toute autre forme appropriée permettant d'empêcher la rotation de la tige filetée ou de la vis lors du vissage de l'écrou.

Le bord radialement externe de la bague peut comporter au moins une patte s'étendant radialement vers l'extérieur, engageable dans au moins une encoche de la jupe de l'écrou.

Plus particulièrement, le bord radialement externe de la bague peut comporter au moins deux pattes radiales s'étendant diamétralement à l'opposé l'une de l'autre.

De manière préférée, la jupe de l'écrou comporte au moins deux encoches décalées angulairement l'une par rapport à l'autre d'une valeur correspondant à un nombre entier de pas entre deux dents ou entre deux crans, augmentée d'un demi pas environ.

De cette manière, pour une même position angulaire de l'écrou par rapport à la tige filetée, les possibilités de montage de la bague sont doublées. Comme cela est indiqué ci-après, des jeux de montage entre la bague d'une part et la jupe de l'écrou ou la tige filetée d'autre part, peuvent permettent d'absorber des décalages angulaires inférieurs à un demi pas. Ainsi, quelle que soit la position de l'écrou par rapport à la tige filetée, le montage de la bague est toujours possible.

Dans une variante de réalisation de l'invention, l'écrou comporte au moins trois encoches, respectivement une première et une deuxième encoches décalées angulairement l'une par rapport à l'autre d'une valeur correspondant à un nombre entier de pas entre deux dents ou entre deux crans, augmentée d'un demi pas environ, et une troisième encoche décalée angulairement de la première encoche d'une valeur correspondant à un nombre entier de pas entre deux dents ou entre deux crans, augmentée d'un quart de pas ou de trois quarts de pas environ.

Les possibilités de montage sont alors encore augmentées. De la même manière que précédemment, les jeux de montage entre la bague d'une part et la jupe de l'écrou ou la tige filetée d'autre part, permettent d'absorber des décalages angulaires inférieurs à un quart de pas.

De manière avantageuse, les moyens de couplage en rotation avec l'écrou et/ou les moyens de couplage en rotation avec la tige filetée comportent un jeu de montage autorisant le montage de la bague entre l'écrou et la tige filetée, quelles que soient leurs positions.

Préférentiellement, le dispositif comporte des moyens de retenue axiale de la bague à l'intérieur de la jupe.

Les moyens de retenue axiale peuvent comporter un anneau élastique fendu ou circlips monté dans une gorge intérieure de la jupe de l'écrou.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une vue en perspective d'un dispositif de fixation selon l'invention ;
- la figure 2 est une vue correspondant à la figure 1, partiellement en coupe ;
- la figure 3 est une vue agrandie de la figure 2 ;
- la figure 4 est une vue de face et partiellement en coupe, d'une partie du dispositif de fixation ;
- la figure 5 est une vue de dessus et partiellement en coupe, du dispositif de fixation selon l'invention ;
- la figure 6 est une vue en perspective d'une vis du dispositif de fixation ;
- la figure 7 est une vue en perspective d'un écrou du dispositif de fixation ;
- la figure 8 est une vue de dessus de l'écrou ;
- la figure 9 est une vue en perspective d'une bague intermédiaire du dispositif de fixation ;
- la figure 10 est une vue en perspective d'un anneau élastique du dispositif de fixation.

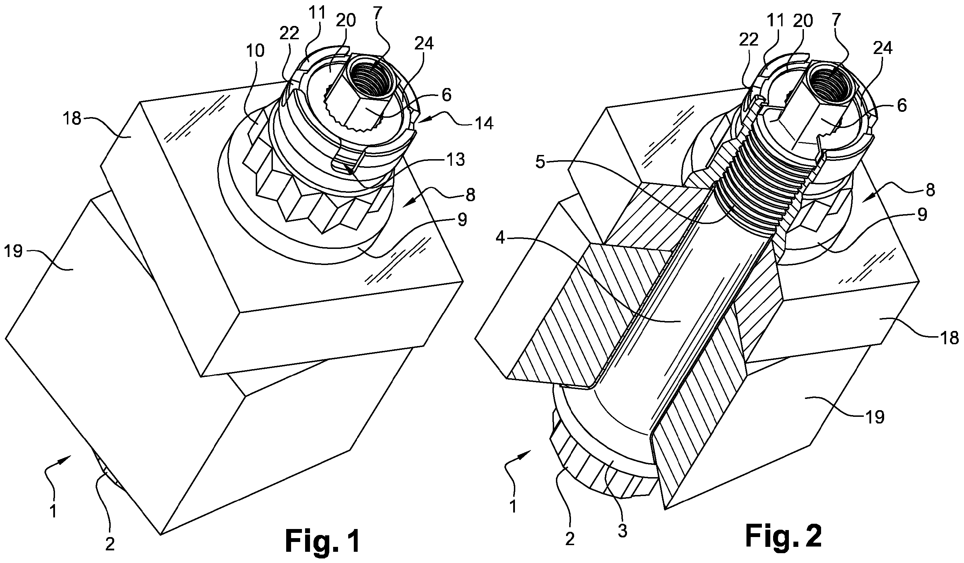

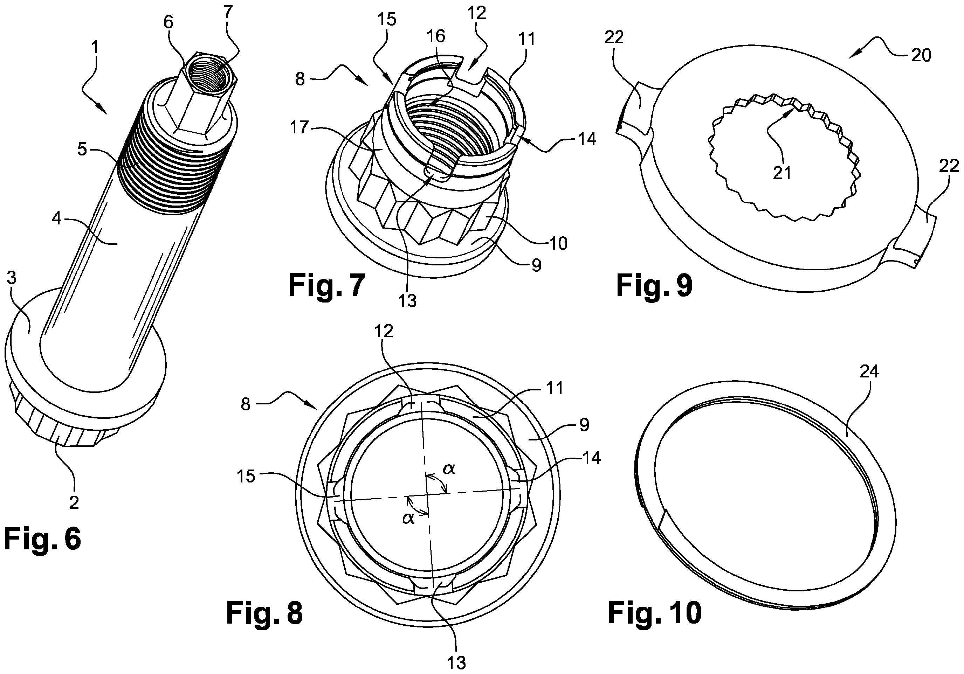

Une forme de réalisation d'un dispositif de fixation est représentée aux figures 1 à 5. Ce dispositif comporte une vis 1, mieux visible en figure 6, comportant une tête 2 équipée d'une collerette 3, à partir de laquelle s'étend une tige cylindrique 4 dont l'extrémité 5 seulement est filetée.

L'extrémité de la tige est prolongée par une partie 6 de section réduite et hexagonale, présentant un trou taraudé 7 en son centre, destiné au montage d'une autre vis (non représentée).

Un écrou 8 est vissé sur l'extrémité filetée 5 de la vis 1, cet écrou 8 comportant une embase élargie 9, une zone 10 de section en étoile ou bi-hexagonale servant au serrage de l'écrou, et une jupe 11 de forme cylindrique s'étendant axialement et dans laquelle sont ménagées deux paires d'encoches 12 à 15 (voir figures 7 et 8). Les encoches 12, 13 et 14, 15 d'une même paire sont diamétralement opposées l'une à l'autre, deux encoches successives étant décalées angulairement d'un angle non droit.

Plus précisément, le décalage angulaire α entre les encoches 12 et 14 et celui entre les encoches 13 et 15 est de l'ordre de 82,5°.

La paroi interne de l'écrou comporte un filetage 16 qui s'étend à l'intérieur de la jupe 11 dont une zone est déformée de façon à présenter une section rétrécie. Ce rétrécissement de la section est obtenu ici par écrasement de la jupe de l'écrou au niveau d'une gorge externe 17 avant vissage de l'écrou 8 sur la vis 1.

Le rétrécissement de la section pourrait également être obtenu par la réalisation d'un filetage de forme tronconique par exemple.

Lors de la fixation ou de l'assemblage de deux éléments 18, 19, tels que deux éléments d'un aéronef, l'écrou 8 est vissé sur la vis 1, jusqu'à ce que l'extrémité filetée 5 de la vis 1 atteigne la zone rétrécie de la jupe de l'écrou 8. Le couple de vissage doit alors être augmenté afin de déformer la jupe de l'écrou 8 par forçage. Cette déformation forme un frein s'opposant au dévissage de l'écrou 8.

Après vissage, une bague intermédiaire 20 est montée entre la jupe 11 de l'écrou 8 et l'extrémité hexagonale 6 de la vis 1.

Comme illustré en figure 9, cette bague 20 comporte un bord radialement interne pourvu de vingt quatre dents ou crans 21, et un bord externe comportant deux pattes 22 s'étendant radialement vers l'extérieur et diamétralement opposées. Les pattes 22 s'étendent dans un plan décalé axialement par rapport à la face de la bague 20 comportant les dents ou crans 21.

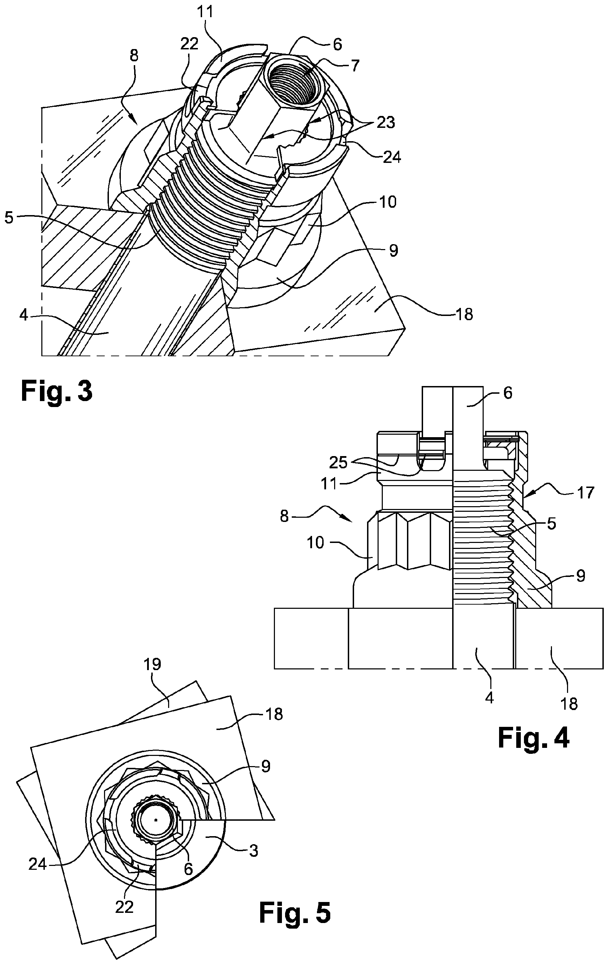

Les dents 21 sont destinées à s'engager sur des moyens d'arrêt en rotation tels que les arêtes saillantes 23 (figure 3) formées par l'extrémité hexagonale 6 de la vis 1 et les pattes 22 sont destinées à être insérées dans l'une des paires d'encoches 12, 13 et 14, 15 de la jupe de l'écrou 8, de façon à coupler l'écrou 8 et la vis 1 en rotation, par l'intermédiaire de la bague 20.

La position de la bague 20 est fonction de la position angulaire de la vis 1 par rapport à l'écrou 8 après vissage.

Le nombre de dents ou crans 21, le décalage angulaire α entre les encoches 12 à 15 et le jeu de montage entre la bague 20 d'une part et la jupe 11 de l'écrou 8 ou la vis 1 d'autre part, permettent le montage de la bague 20 quelle que soit la position angulaire de l'écrou 8 par rapport à la vis 1.

En effet, les encoches 12, 14 et 13, 15 sont décalées angulairement l'une par rapport à l'autre d'une valeur α correspondant à un nombre entier de pas entre deux dents 21 ou entre deux crans 21 (pas de 15°), augmentée d'un demi pas environ (7,5°). En outre, les jeux précités permettent d'absorber des décalages angulaires inférieurs à un demi pas, soit 7,5°.

Ainsi, en pratique, un opérateur choisira de positionner les pattes 22 dans l'une ou l'autre des paires d'encoches 12 à 15, en fonction de la position angulaire de l'écrou 8 par rapport à la vis 1.

En variante, la jupe 11 de l'écrou 8 peut comporter trois paires d'encoches, respectivement une première et une deuxième paires d'encoches décalées angulairement l'une par rapport à l'autre d'une valeur correspondant à un nombre entier de pas entre deux dents 21 ou entre deux crans 21, augmentée d'un demi pas environ, et une troisième paire d'encoches décalées angulairement de la première paire d'encoches d'une valeur correspondant à un nombre entier de pas entre deux dents 21 ou entre deux crans 21, augmentée d'un quart de pas (3,25°) ou de trois quarts de pas environ.

La bague 20 est maintenue axialement à l'intérieur de la jupe 11 à l'aide d'un anneau élastique fendu ou circlips 24 (figure 10) monté intérieurement dans une gorge de la jupe 11 de l'écrou 8.

La position axiale de la bague 20, fonction notamment de la profondeur des encoches 12 à 15 et de la géométrie des pattes 22, est déterminée de façon à laisser un jeu (figure 4) entre l'extrémité de la partie filetée 5 et la surface inférieure de la bague 20, de manière à pouvoir compenser le fait que la longueur de la vis 1 doit être choisie parmi une gamme de longueurs existantes. En effet, en théorie, la longueur de la partie lisse 4 de la vis 1 correspond sensiblement aux épaisseurs cumulées des éléments 18 et 19. En pratique, on choisit une vis dans une gamme disponible, dont la longueur de la partie lisse s'approche le plus de la longueur théorique.

L'écrou et les extrémités des pattes 22 peuvent comporter des marques 25 (figure 4) permettant de s'assurer du bon montage de la bague 20. En effet, le plan des pattes 22 étant décalé par rapport au plan des dents 21 de la bague 20, il convient de s'assurer que les marques 25 sont alignées les unes avec les autres lorsque la bague 20 est en appui axial contre le circlips 24. Si tel est le cas, la bague 20 est correctement positionnée.

En variante, la bague 20 pourrait présenter une structure symétrique. Dans un tel cas, les marques 25 n'auraient plus d'utilité et pourraient être supprimées.

Le dispositif de fixation selon l'invention permet de solidariser en rotation l'écrou 8 et la vis 1, de façon simple et sûre, de manière à éviter le desserrage accidentel de l'écrou 8. Ce dispositif de fixation peut être utilisé dans le domaine aéronautique, mais également dans le domaine automobile, industriel, ou dans tout autre domaine nécessitant une fixation fiable et sûre.

## Revendications

1. Dispositif de fixation comprenant une tige filetée (1), un écrou (8) vissable sur la tige (1) et des moyens de blocage en rotation de l'écrou (8) par rapport à la tige filetée (1) comprenant une bague intermédiaire (20) montée entre l'écrou (8) et une extrémité (6) de la tige filetée (1), cette bague (20) comprenant des moyens (21) de couplage en rotation avec l'extrémité (6) de la tige filetée (1) et des moyens (22) de couplage en rotation avec l'écrou (8), **caractérisé en ce que** l'écrou (8) comprend une partie amincie (11) qui est élastiquement déformable au serrage lors du vissage sur la tige filetée (1) et **en ce que** la bague intermédiaire est montée et immobilisée en rotation dans ladite partie amincie (11) par les moyens (22) de couplage en rotation avec l'écrou (8).

2. Dispositif selon la revendication 1, **caractérisé en ce que** l'extrémité (6) de la tige filetée (1) comporte au moins une arête longitudinale saillante (23), le bord radialement interne de la bague (20) étant pourvu d'une pluralité de dents ou de crans (21) susceptibles de venir en prise avec cette arête longitudinale (23) et définissant une pluralité de positions angulaires de la bague autour de l'extrémité de la tige filetée.

3. Dispositif selon la revendication 2, **caractérisé en ce que** l'extrémité de la tige filetée (1) est une tige axiale (6) de diamètre réduit, à section externe polygonale, par exemple hexagonale.

4. Dispositif selon l'une des revendications 1 à 3, **caractérisé en ce que** le bord radialement externe de la bague (20) comporte au moins une patte (22) s'étendant radialement vers l'extérieur, engageable dans au moins une encoche (12, 13, 14, 15) de la jupe (11) de l'écrou (8).

5. Dispositif selon la revendication 4, **caractérisé en ce que** le bord radialement externe de la bague comporte au moins deux pattes radiales (22) s'étendant diamétralement à l'opposé l'une de l'autre.

6. Dispositif selon l'une des revendications 1 à 5, **caractérisé en ce que** la partie amincie de l'écrou est une jupe cylindrique (11) qui s'étend axialement depuis l'écrou.

7. Dispositif selon l'ensemble des revendications 2, 4 et 6, **caractérisé en ce que** la jupe (11) de l'écrou (8) comporte au moins deux encoches (12, 14) décalées angulairement l'une par rapport à l'autre d'une valeur (α) correspondant à un nombre entier de pas entre deux dents (21) ou entre deux crans (21), augmentée d'un demi pas environ.

8. Dispositif selon la revendication 7, **caractérisé en ce que** l'écrou (8) comporte au moins trois encoches, respectivement une première et une deuxième encoches décalées angulairement l'une par rapport à l'autre d'une valeur correspondant à un nombre entier de pas entre deux dents ou entre deux crans, augmentée d'un demi pas environ, et une troisième encoche décalée angulairement de la première encoche d'une valeur correspondant à un nombre entier de pas entre deux dents (21) ou entre deux crans (21), augmentée d'un quart de pas ou de trois quarts de pas environ.

9. Dispositif selon l'une des revendications 1 à 8, **caractérisé en ce que** les moyens (22) de couplage en rotation avec l'écrou (8) et/ou les moyens (21) de couplage en rotation avec la tige filetée (1) présentent un jeu de montage autorisant le montage de la bague (20) entre l'écrou (8) et la tige filetée (1), quelles que soient leurs positions.

10. Dispositif selon l'une des revendications 6 à 9, **caractérisé en ce qu'**il comporte des moyens (24) de retenue axiale de la bague (20) à l'intérieur de la jupe (11).

11. Dispositif selon la revendication 10, **caractérisé en ce que** les moyens de retenue axiale comportant un anneau élastique fendu ou circlips (24) monté dans une gorge intérieure de la jupe (11) de l'écrou (8).

## Patentansprüche

1. Befestigungsvorrichtung, enthaltend eine Gewindestange (1), ein auf die Gewindestange (1) aufschraubbare Mutter (8) und Drehsicherungsmittel zur Drehsicherung der Mutter (8) bezüglich der Gewindestange (1), die einen zwischen der Mutter (8) und einem Ende (6) der Gewindestange (1) gelagerten Zwischenring (20) aufweisen, wobei dieser Ring (20) Drehkopplungsmittel (21) zur Drehkopplung mit dem Ende (6) der Gewindestange (1) und Drehkopplungsmittel (22) zur Drehkopplung mit der Mutter (8) aufweist, **dadurch gekennzeichnet, dass** die Mutter (8) einen verjüngten Abschnitt (11) aufweist, der beim Aufschrauben auf die Gewindestange (1) unter Spannung elastisch verformbar ist, und dass der Zwischenring in dem verjüngten Abschnitt (11) gelagert und über die Drehkopplungsmittel (22) zur Drehkopplung mit der Mutter (8) drehbar festgelegt ist.

2. Vorrichtung nach Anspruch 1, **dadurch gekennzeichnet, dass** das Ende (6) der Gewindestange (1) zumindest eine vorspringende Längskante (23) aufweist, wobei der radial innere Rand des Rings (20) mit einer Mehrzahl von Zähnen bzw. Rasten (21) versehen ist, die mit dieser Längskante (23) in Eingriff gelangen können und eine Mehrzahl von Winkelpositionen des Rings um das Ende der Gewindestange herum definieren.

3. Vorrichtung nach Anspruch 2, **dadurch gekennzeichnet, dass** das Ende der Gewindestange (1) eine axiale Stange (6) mit verminderten Durchmesser und polygonalem, beispielsweise sechseckigem, Außenquerschnitt ist.

4. Vorrichtung nach einem der Ansprüche 1 bis 3, **dadurch gekennzeichnet, dass** der radial äußere Rand des Rings (20) zumindest eine Lasche (22) enthält, die sich radial nach außen erstreckt und in zumindest eine Einkerbung (12, 13, 14, 15) des Überwurfs (11) der Mutter (8) eingreifen kann.

5. Vorrichtung nach Anspruch 4, **dadurch gekennzeichnet, dass** der radial äußere Rand des Rings zumindest zwei radiale Laschen (22) enthält, die sich einander diametral entgegengesetzt erstrecken.

6. Vorrichtung nach einem der Ansprüche 1 bis 5, **dadurch gekennzeichnet, dass** der verjüngte Abschnitt der Mutter ein zylindrischer Überwurf (11) ist, der sich axial von der Mutter aus erstreckt.

7. Vorrichtung nach den Ansprüchen 2, 4 und 6 zusammengenommen, **dadurch gekennzeichnet, dass** der Überwurf (11) der Mutter (8) zumindest zwei Einkerbungen (12, 14) aufweist, die im Winkel zueinander um einen Wert (α) versetzt sind, der einer ganzen Teilungszahl zwischen zwei Zähnen (21) bzw. zwischen zwei Rasten (21), erhöht um etwa eine halbe Teilung, entspricht.

8. Vorrichtung nach Anspruch 7, **dadurch gekennzeichnet, dass** die Mutter (8) zumindest drei Einkerbungen aufweist, nämlich eine erste und eine zweite Einkerbung, die im Winkel zueinander um einen Wert versetzt sind, der einer ganzen Teilungszahl zwischen zwei Zähnen bzw. zwischen zwei Rasten, erhöht um etwa eine halbe Teilung, entspricht, und eine dritte Einkerbung, die im Winkel von der ersten Einkerbung um einen Wert versetzt ist, der einer ganzen Teilungszahl zwischen zwei Zähnen (21) bzw. zwischen zwei Rasten (21), erhöht um etwa eine Viertel Teilung bzw. um etwa eine Dreiviertel Teilung, entspricht.

9. Vorrichtung nach einem der Ansprüche 1 bis 8, **dadurch gekennzeichnet, dass** die Drehkopplungsmittel (22) zur Drehkopplung mit der Mutter (8) und/oder die Drehkopplungsmittel (21) zur Drehkopplung mit der Gewindestange (1) ein Lagerungsspiel aufweisen, das die Lagerung des Rings (20) zwischen Mutter (8) und Gewindestange (1) unabhängig von deren Positionen gestattet.

10. Vorrichtung nach einem der Ansprüche 6 bis 9, **dadurch gekennzeichnet, dass** sie Haltemittel (24) zum axialen Festhalten des Rings (20) innerhalb des Überwurfs (11) aufweist.

11. Vorrichtung nach Anspruch 10, **dadurch gekennzeichnet, dass** die Haltemittel zum axialen Festhalten einen geschlitzten Federring bzw. Sicherungsring (24) aufweisen, der in einer inneren Nut des Überwurfs (11) der Mutter (8) gelagert ist.

## Claims

1. Device for fastening comprising a threaded rod (1), a nut (8) can be screwed on the rod (1) and means for locking the nut in rotation (8) in relation to the threaded rod (1) comprising an intermediary ring (20) mounted between the nut (8) and an end (6) of the threaded rod (1), this ring (20) comprising rotational coupling means (21) with the end (6) of the threaded rod (1) and rotational coupling means (22) with the nut (8), **characterized in that** the nut (8) comprises a thinned portion (11) which is elastically deformable to tightening during the screwing on the threaded rod (1) and **in that** the intermediary ring is assembled and immobilized in rotation in said thinned portion (11) by the rotational coupling means (22) with the nut (8).

2. Device according to claim 1, **characterized in that** the end (6) of the threaded rod (1) comprises at least one longitudinal protruding ridge (23), the radially internal edge of the ring (20) being provided with a plurality of teeth or catches (21) that can engage with this longitudinal ridge (23) and defining a plurality of angular positions of the ring around the end of the threaded rod.

3. Device according to claim 2, **characterized in that** the end of the threaded rod (1) is an axial rod (6) of reduced diameter, with polygonal external section, for example hexagonal.

4. Device according to one of claims 1 to 3, **characterized in that** the radially external edge of the ring (20) comprises at least one lug (22) extending radially towards the exterior, that can engage in at least one notch (12, 13, 14, 15) of the skirt (11) of the nut (8).

5. Device according to claim 4, **characterized in that** the radially external edge of the ring comprises at least two radial lugs (22) extending diametrically opposite one another.

6. Device according to one of claims 1 to 5, **characterized in that** the thinned portion of the nut is a cylindrical skirt (11) which extends axially from the nut.

7. Device according to the set of claims 2, 4 and 6, **characterized in that** the skirt (11) of the nut (8) comprises at least two notches (12, 14) offset angularly in relation to one another by a value (α) corresponding to an integer of pitches between two teeth (21) or between two catches (21), increased by approximately one half pitch.

8. Device according to claim 7, **characterized in that** the nut (8) comprises at least three notches, respectively a first and a second notches offset angularly in relation to one another by a value corresponding to an integer of pitches between two teeth or between two catches, increased by approximately one half pitch, and a third notch offset angularly from the first notch by a value corresponding to an integer of pitches between two teeth (21) or between two catches (21), increased by approximately a quarter of a pitch or by three-quarters of a pitch.

9. Device according to one of claims 1 to 8, **characterized in that** the rotational coupling means (22) with the nut (8) and/or the rotational coupling means (21) with the threaded rod (1) have an assembly clearance authorizing the assembly of the ring (20) between the nut (8) and the threaded rod (1), regardless of their positions.

10. Device according to one of claims 6 to 9, **characterized in that** it comprises means (24) of axial retention of the ring (20) inside the skirt (11).

11. Device according to claim 10, **characterized in that** the means of axial retaining comprising a split elastic ring or circlips (24) assembled in an interior groove of the skirt (11) of the nut (8).
